# EUROPEAN PATENT SPECIFICATION

(11) **EP 1 585 250 B1**
(45) Date of publication and mention of the grant of the patent: **20.01.2010**
(21) Application number: 04394020.4
(22) Date of filing: 08.04.2004
(51) Int. Cl.: H04L 12/14, H04M 15/00, H04M 17/00

(54) **Method and system for charging for telecommunications services**
Verfahren und System für das Berechnen von Telekommunikationsdiensten
Méthode et système de facturation de services de télécommunications

(43) Date of publication of application: 12.10.2005
(73) Proprietor: TANGO TELECOM LIMITED, Limerick (IE)
(72) Inventor: Ward, Colm M., c/o Tango Telecom Limited, Limerick (IE); Kelly, Kieran, c/o Tango Telecom Limited, Limerick (IE); Mullin, David, c/o Tango Telecom Limited, Limerick (IE); Mulqueen, Kay, c/o Tango Telecom Limited, Limerick (IE)
(74) Representative: Lane, Cathal Michael

(56) References cited:
- WO-A-00/22792
- WO-A-00/24161
- WO-A-03/056867
- US-A1- 2003 031 160

## Description

### Field of the Invention

The present invention relates to charging systems for telephony services, in particular for data services over mobile or cellular telephony networks.

### Background to the Invention

It is well known that voice telephony services may be charged in real time using a number of techniques, among which are the Service Node method and the Intelligent Network method.

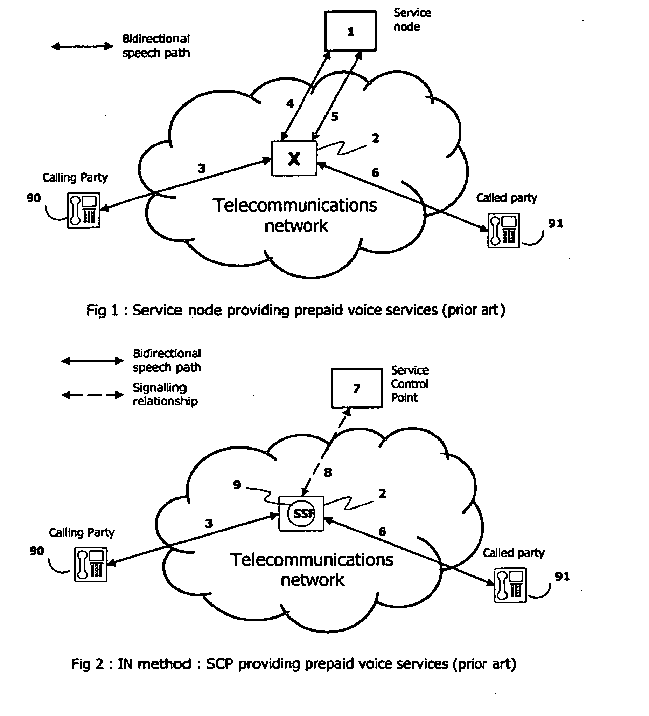

Figure 1 of the drawings shows an embodiment of the Service Node method. The actual voice traffic bearers are routed to a special Service Node 1 from one or more of the switch(es) 2 which establish and clear down the calls. The call signalling most commonly uses a Signaling System 7 (SS7) protocol known as ISDN User Part (ISUP), as specified in the ITU-T standards Q.763, Q.767. The Service Node has access to a subscriber database, containing an Account Balance, and also has a means of calculating the tariff rate which is to be charged for each specific call. This will typically depend at least on calling party identity 90, called party identity 91, time of day, day of week, and called party account plan, but may include many other parameters well known in the industry.

When a call 3, 4 is established through a service node, the account balance is validated and if it is judged to meet certain criteria, the call is established onward 5, 6 out of the service node to the eventual destination, possibly through a number of other switches.

If the initial account balance is insufficient, or becomes so during the course of a call, the end to end connection is broken down by the service node, possibly following various notifications to the called or calling party. As is well known in the art, these notifications may be by insertion of warning tones, by connection to Interactive Voice Response (IVR) units, by Short Message Service (SMS) messages or by Unstructured Supplementary Service Data (USSD) signalling, where these last two typically apply only to cellular services. Charging for telephony services in this way is known as prepaid charging.

Figure 2 of the drawings shows an embodiment of the Intelligent Network (IN) method, which is another method of prepaid charging. A control protocol is used between the switches 2 handling the calls and a Service Control Point (SCP) 7, which supplies the prepaid service. The major difference between this and the Service Node method is that only the control signals 8 are routed to the SCP - it is not necessary to route the actual voice traffic bearers. This gives major capital and operational savings and other benefits.

The additional major functionality needed in the switches for implementing the IN method is known as the Service Switching Function (SSF) 9, and both this and the control protocols used in the Intelligent Network method are well known in the art, and are specified in ITU-T [Q.1211-Q.1215], Q.1218 and ETSI ETS 300 374-1 known collectively as INAP CS-1, and ITU-T [Q.1221-Q.1225], Q.1228 and ETSI EN 301 140-1, known collectively as INAP CS-2.

Voice telephony services can also be supplied in packet mode networks, in one method controlled by the use of the so called Session Initiation Protocol (SIP), as specified by the IETF in RFC 2543 and RFC 2327. These do not follow the IN model, however it is well known in the art that voice services in packet networks can nonetheless be controlled by IN systems in real time using the so called "soft SSF" method.

It is also well known in the art that the standardisation bodies have approved methods for real time control specifically in cellular networks. These methods have been approved not just for voice but also for data services. The methods are based on a set of standards known as CAMEL, as specified in GSM 03.78 and 09.78, known collectively as CAP2; and 3GPP TS 23.078 and TS 29.078, known collectively as CAP3. A parallel set of TIA standards known as Wireless Intelligent Network (WIN) are specified for use in certain TDMA and CDMA networks, and these are also incorporated in the latest releases of 3GPP2.

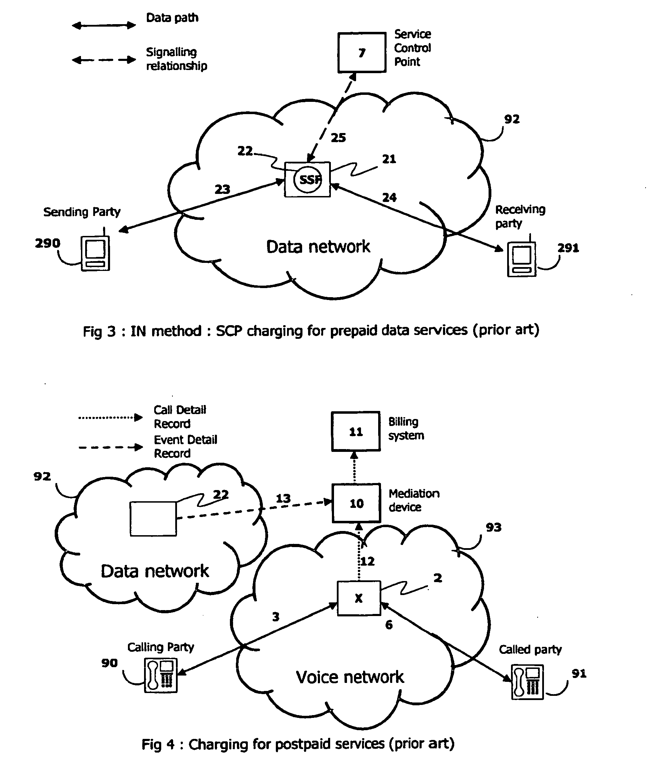

Figure 3 of the drawings shows an embodiment of these new sets of control protocols, which are also based on the Intelligent Network method. In this example, a Network Element 21 in the data network 92 uses an internal SSF function 22 to allow an SCP 7 to exercise real time control over the data flow, for example using the CAP3 protocol 25. Typically this would be used for real time charging for data services. The Network Element 21 could be any or all of the following:
(i) Short Message Service Centre (SMSC) in GSM or IS-41 based networks
(ii) Serving GPRS Support Nodes (SGSN) in GSM networks or Packet Control Function (PCF) nodes in CDMA data networks
(iii) GGSN (Gateway GPRS Support Nodes), sometimes referred to as Enhanced or Intelligent GGSNs if they perform SSF functions, or PDSN (Packet Data Service Nodes) in CDMA data networks
(iv) Multi Media Message Centres (MMSCs) if equipped with SSF functions
(v) or various types of data and signalling proxies which may have SSF functions incorporated for charging or other purposes.

For the purposes of this patent, data network elements which have SSF functionality will be referred to by the generic name Data SSFs (DSSFs), without specifying whether it is a standard network element or some form of proxy. The use of SSFs or "soft SSFs" in this way, and the use of proxy network elements, is well known in the art.

Traditionally, real time charging by the above methods, for voice and data, has been used only for prepaid accounts, where an accurate account balance is maintained in real time and services must be paid for in advance. If the account balance is or becomes insufficient, the service is denied or interrupted.

Postpaid charging for voice services, on the other hand, has heretofore been implemented by production of usage records. Figure 4 of the drawings illustrates an embodiment of such a method. The usage records, known as Call Detail Records (CDRs) 12, are produced from the network switches 2 after the calls have taken place. These CDRs have traditionally been collected by non real time Mediation Devices 10, where some preprocessing may be done, before the CDRs are sent to a billing system 11. In a similar way, for postpaid data charging, some or all of the data network elements involved may produce usage records, known for example as Event Detail Records (EDRs) 13, which may be collated and possibly preprocessed by Mediation Devices 10, and sent to a Billing System 11. Charging for telephony services in this way is known as postpaid charging.

The existence of two distinct categories of accounts, that is, prepaid and postpaid, with two distinct networks and philosophies for charging (real time and non-real time), and in particular with multiple incompatible approaches to rating and tariffing for services, greatly increases the operating and capital costs of telecommunications networks and causes multiple and diverse inflexibilities. These difficulties are compounded by the fact that distinct rating and charging techniques may also be used for voice and the various types of data.

Increasingly, current generation billing systems are designed in a converged method, whereby account balances are maintained in real time, irrespective of whether the account balance is allowed to become negative or not. These systems are therefore capable of handling both postpaid and prepaid accounts, assuming that the interface to the network elements that provide the service is also real time. Combinations of prepaid and postpaid are also possible, for example based on the dialled number, or the time of day, or other parameters or combinations of parameters.

Document WO 00/22792 describes a system for controlling and managing voice and data services including a media gateway interface coupled to clause protocols in the network.

### Object of the Invention

It is an object of the present invention to provide a method and system for charging for voice and data telecommunications services, for both prepaid and postpaid accounts. It is another object of the present invention to enable evolution towards a converged charging system.

### Summary of the Invention

According to a first aspect of the present invention, there is provided a converged charging module for use in a cellular telecommunications system comprising a Service Switching Function module, capable of emulating a voice based circuit switch; and a prepaid interface adapter, in communication with the Service Switching Function module and connectable to a prepaid charging module which uses a voice call protocol, so that the prepaid charging module appears to be communicating with a voice based circuit switch using the voice call protocol; and at least one Service Control Function module, capable of emulating control functions of the prepaid charging module; and a data interface adapter, in communication with the at least one Service Control Function module and connectable to a data network element which uses a data service protocol, so that the data network element appears to be communicating with the prepaid charging module; and a Session Control Core (SCC), in communication with the at least one Service Switching Function module and the at least one Service Control Function module, and capable of translating data received from the data network element, using the data service protocol, to simulate a voice call using the voice call protocol for output to the prepaid charging module.

An advantage of these features of the invention is that where the voice call protocol and the data service protocol are incompatible, the data network element may implement charging for GPRS and SMS data services, without having the costs, disruption and possible delays associated with upgrading the prepaid charging module or other network elements.

Suitably, the prepaid charging module is a Service Control Point module. The data network element may comprise a data Service Switching Function (SSF). According to one embodiment of the invention, the data SSF comprises a Serving GPRS Support Node (SGSN). The data SSF may supports a CAP3 protocol. The prepaid charging module may use a CAP2 or INAP CS 1 protocol.

According to an optional feature of the invention, the converged charging module further comprises a voice interface adapter, in communication with the at least one Service Control Function and connectable to a voice based circuit switch, so that the converged charging module acts as a proxy charging module for the voice based circuit switch.

Optionally, the converged charging module further comprises an Application Programming Interface (API) logic module, which implements an open API; and an API interface adapter, in communication with the API logic module and connectable to a third party content platform, so that the API logic module can communicate in real time with the Session Control Core to allow for billing of data sent by the third party content platform by simulating a voice call to the prepaid charging module. The data sent by the third party content platform may be a mobile telephone application.

The converged charging module may further comprise a Session Initiation Protocol (SIP) proxy module (58) capable of emulating a SIP based application server; and a SIP interface adapter (62), in communication with the SIP proxy module (58) and connectable to a SIP controlled device, so that the SIP controlled device appears to be communicating with a SIP based application server. Optionally, the SIP controlled device is a soft switch.

According to another optional feature of the invention, the converged charging module further comprises an internal rating function module which rates activity controlled by the converged charging module, calculates an equivalent voice call charge and simulates a voice call for output to the prepaid charging module (7) via the prepaid interface adapter (65) in order to charge a user for the activity. The internal rating function module applies the appropriate tariff to an activity to charge a user for that activity.

Alternatively, the converged charging module further comprises a charging control logic module; and a charging interface adapter, in communication with the charging control logic module and connectable to an external rating system, so that a charge associated with an activity controlled by the converged charging module may be determined by the external rating system. Suitably, the charging control module produces Call Detail Records or Event Detail Records for each call or data session. Optionally, the charging control logic module determines, for a particular call or data session, whether an associated charge is to be prepaid or postpaid.

In a preferred embodiment of the present invention, the charging interface adapter and the external rating system communicate using Parlay rating standards. These standards are specified by 3GPP in Parlay 3.2, ES 201 915-1 V1.3.1 and more recent Parlay 4.0. The external billing system may be a Converged Billing System.

The converged charging module may also comprise a local services module, which is capable of implementing service functions that would normally be provided by the prepaid charging module. Preferably, the local services module is capable of mapping a notification of an insufficient account balance issued by the prepaid charging module to an equivalent data based notification for relay to the user. The data based notification may be an SMS message or a redirection of a web page accessed by the user.

According to a second aspect of the invention, there is provided a Session Control Core (SCC) for translating data received from a data network element, using a data service protocol, to simulate a voice call using a voice call protocol for output to a prepaid charging module, the SCC being connectable to at least one Service Switching Function module and at least one Service Control Function module, and comprising a state machine capable of processing a request from a user for a service, irrespective of whether the requested service is a data service or a voice service, said state machine having:
an idle state, in which the SCC is capable of accepting the request from the user for a voice or data service;
a connecting state, in which the SCC is capable of establishing a connection between the user and the requested voice or data service;
a routing state, in which interconnection is established to allow (user) interaction between the user and the requested service;
a user interaction state, in which data is exchanged between the user and the requested service; and
an active state, in which the connection between the user and the requested service is maintained;
and wherein the state machine is capable of transitioning between states.

The service requested by the user may also be considered to be the destination service.

An advantage provided by this aspect of the invention is that only one state machine model is required to handle all of the activity controlled by the Converged Charging Module, since all voice and data activity is treated in an identical manner without the state machine differentiating between them.

Preferably, the state machine can transition from the idle state to the connecting state. The state machine may be capable of transitioning from the connecting state to the routing state, the active state or the idle state. The state machine may be capable of transitioning from the routing state to the user interaction state or the idle state. The state machine may be capable of transitioning from the user interaction state to the connecting state or the idle state. The state machine may be capable of transitioning from the active state to the idle state. Desirably, the state machine is capable of all of the above transitions, or any combination thereof.

According to a preferred feature of the invention, the state machine is configured to be responsive to abort inputs. The abort inputs trigger the state machine to transition to the idle state.

According to a further preferred feature of the invention, the state machine is configured to be responsive to a disconnect input. The disconnect input triggers the state machine to transition to the idle state.

### Brief Description of the Drawings

Figure 1 shows a prior art Service Node system for providing voice services;
Figure 2 shows a prior art Intelligent Network system for providing voice services;
Figure 3 shows a prior art system for providing prepaid data services;
Figure 4 shows a prior art system for providing postpaid voice and data services;
Figure 5 shows a telecommunications network using a converged charging module according to a first embodiment of the present invention;
Figure 6 shows a telecommunications network using a Converged Charging System (CCS) according to a second embodiment of the present invention;
Figures 7 and 8 show a telecommunications network using a converged charging module according to a third embodiment of the present invention;
Figure 9 shows a telecommunications network using a converged charging module according to a fourth embodiment of the present invention;
Figure 10 shows an embodiment of the converged charging module of the present invention;
Figure 11 shows an embodiment of the state machine of the Session Control Core according to the second aspect of the invention; and
Figure 12 shows the support functions of an embodiment of the converged charging module.

### Detailed Description of the Drawings

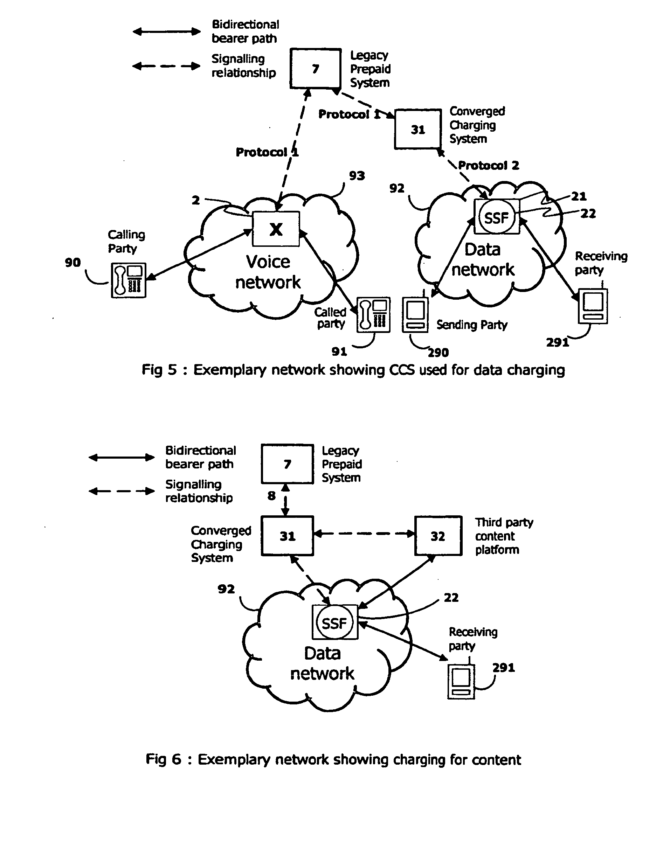

Referring to Figure 5 of the drawings, there is illustrated a cellular telecommunications network having a converged charging module according to a first embodiment of the present invention. A voice based circuit switch, or a network of switches, 2 is controlled by a prepaid charging module 7. In the current embodiment, the prepaid charging module is a Service Control Point (SCP). The Service Control Point provides prepaid charging services for the telecommunications network. The switch 2 communicates with the Service Control Point 7 using a voice call protocol, for example, a CAP2 or INAP CS1 protocol. In this case, the SCP is capable of charging for voice-based services only.

Data services are provided by a separate data network element 21. In the current embodiment, the data network 92 comprises a data Service Switching Function (SSF) 22. The Data SSF 22 could be a SGSN that uses a CAP 3 protocol. The voice call protocol and the data service protocol are incompatible.

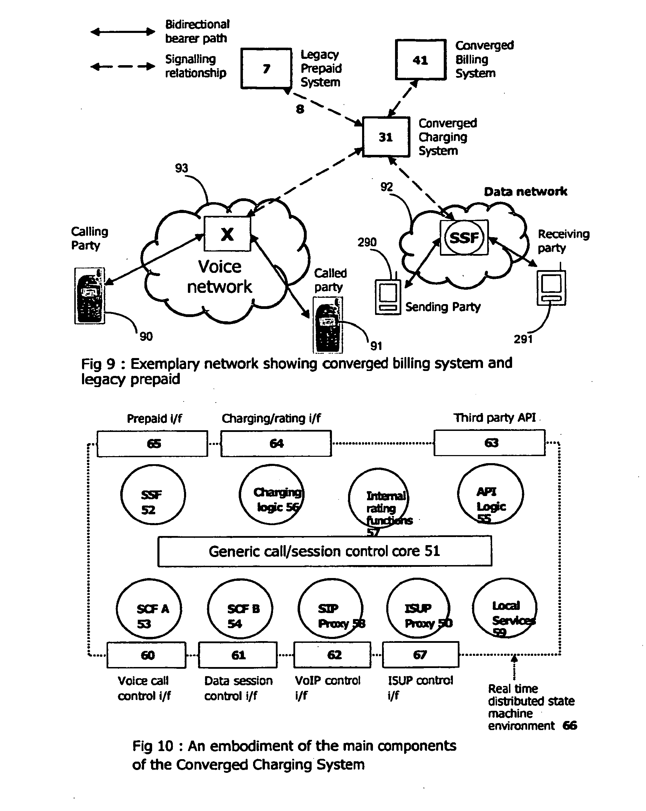

According to the present invention, a Converged Charging System (CCS) module 31, illustrated in Figure 10 of the drawings, is inserted in the telecommunications network between the SCP 7 and the data network element 21. The CCS comprises a Service Switching Function module 52, a Service Control Function module 54 and a Session Control Core 51.

A function of the CCS is to translate between the data service protocol which controls the data SSF 22 in the data network element 21 and the voice call protocol, which controls the SCP. In this case the CCS 31 serves the function of interworking the incompatible protocols, by simulating voice calls for output to the SCP, via a prepaid interface adapter 65. The prepaid interface adapter allows the CCS to communicate with the prepaid charging module so that the prepaid charging module appears to be communicating with a voice based circuit switch, using the voice call protocol. The CCS may also provide additional rating capability that enhances the voice-only charging ability of the SCP.

An advantage provided by these features of the invention, is that the CAP3 SGSN can implement charging for GPRS and SMS data services, without having the costs, disruption and possible delays associated with upgrading the SCP or other network elements.

Where the Data SSF is in fact a data proxy, either for SMS or GPRS services, then the same effect can be achieved also without upgrading the data network with CAP3 functions.

Figure 6 of the drawings illustrates a telecommunications network having a converged charging module according to a second embodiment of the invention. In this embodiment, the CCS 31 additionally comprises an API logic module 55, which implements an open API. A third party content platform 32 may communicate with the CCS via an API interface adapter 63. The API function allows the third party content platform 32 to charge in real time from the SCP 7, even though the third party content platform uses a protocol that is incompatible with the voice call protocol. The CCS 31 again interworks the incompatible protocols and provides additional rating capabilities for the API. This embodiment of the invention may be used to charge for provision of content (over SMS or GPRS) to prepaid subscribers 291, for example, charging for ringtone downloads or for the use of Multi-media Messaging Services (MMS).

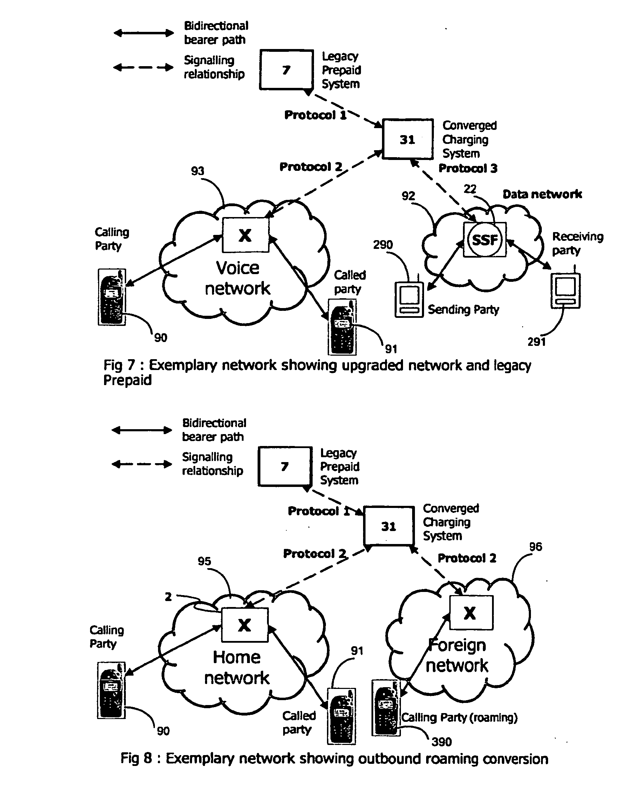

A third embodiment of the invention is shown in Figures 7 and 8 of the drawings. The CCS 31 itself acts as a proxy for the prepaid SCP 7, enabling the home voice network, for example, to be upgraded with new control protocols independent of the SCP. In this embodiment, the CCS comprises a further Service Control Function module 53 and a voice call control interface adapter 60. The interface adapter 60 allows the SCF module 53 to communicate with a voice based circuit switch. This embodiment may be used advantageously where a CAP 2 protocol is used to control the switches, thereby enabling prepaid roaming (inbound), with older CS 1 based protocols still used to interface to the SCP. In the case where the CCS is also accessible from foreign networks, then this embodiment can also support outbound prepaid roaming, again without upgrading the SCP as shown in Figure 8 of the drawings.

A fourth embodiment of the present invention is shown in Figure 9 of the drawings. In this embodiment, the CCS has an additional charging interface adapter 64 that acts as a network interface to a Converged Billing System (CBS) 41. The CCS also comprises a charging control logic unit 56, which determines for a particular call or data session whether an associated charge is to be prepaid or postpaid. In this embodiment the charging interface adapter 64 allows the charging control logic unit 56 to communicate with the CBS. The charge associated with an activity controlled by the CCS 31 may then be determined by the CBS 41. The CBS is used to implement converged rating and charging for all traffic, data and voice, prepaid and postpaid, while the legacy prepaid system remains in service and continues to handle the real time prepaid account balance. At a later stage, the prepaid accounts may be migrated completely to the CBS, depending on the configuration of the CCS.

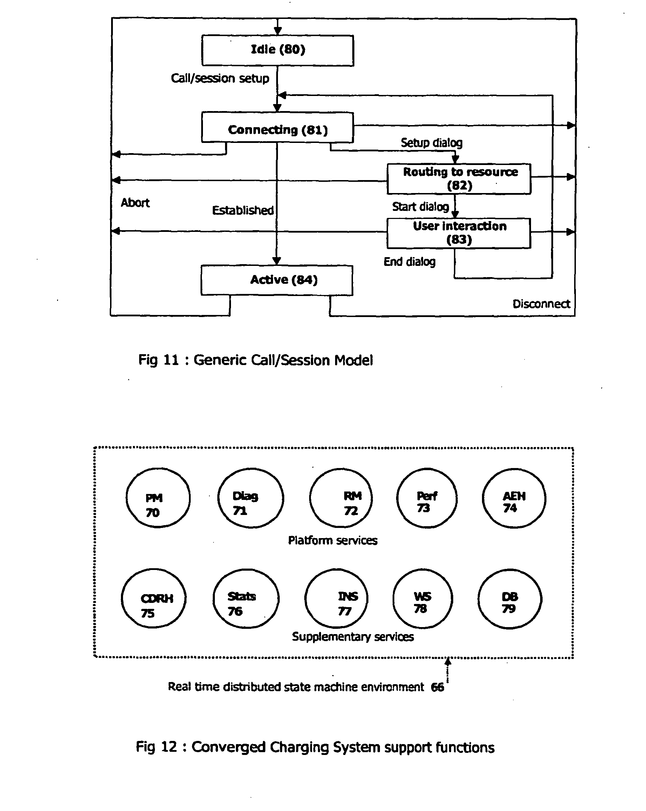

An embodiment of the main components of the Converged Charging System 31 is shown in Figure 10 of the drawings. The CCS comprises a real time Generic Call/Session Control Core 51, which handles voice calls (whether circuit switched, IN or Voice over IP), data, and multimedia sessions, in a generic and abstract form. This core uses message passing based on the Corba Interface Definition Language (IDL) and on Abstract Syntax Notation (ASN1). The generic call model is based on a modified CAMEL SCF call model, as shown in Figure 11, while the charging model is based on the Parlay standards referred to earlier. This abstract call model applies for voice, data and for event based activity. A number of interface adapters 60, 61, 62, 63, 64, 65, 67 and state machine modules 52, 53, 54, 55, 56, 58 are associated with the core, in addition to a number of auxiliary processing modules 57, 59. All of the functions shown are implemented in a real time, multiple instance, distributed state machine environment 66

The Service Switching Function (SSF) 52 is an implementation of the INAP/CAP/WIN standards listed above. It performs trigger detection logic and associated functions. The SSF can have multiple distinct instances, each of which itself supports multiple instances. The SSF communicates with a prepaid charging system 7 via an interface adapter 65. This may use conventional INAP/CAP/WIN/SS7, INAP/CAP/WIN/IP or proprietary interfaces, in such a way that the prepaid charging system 7 appears to be communicating with a conventional voice based circuit switch. According to the present invention, charging is conducted on the prepaid system by simulating voice calls.

The Service Control Functions (SCF) 53, 54 are partial implementations of the INAP/CAP/WIN standards referred to earlier. They serve to emulate the control functions of standard Service Control Points, so that network elements connected via the appropriate adapter modules 60, 61, appear to be communicating with SCPs using a variety of the standard and/or proprietary protocols. The SCFs can have multiple distinct instances (two are shown, SCFA 53 and SCFB 54), each of which itself supports multiple instances.

An internal rating function module 57 may be used to rate activity controlled by the CCS, in such a way that amounts of money are deducted for equivalent voice calls from the prepaid charging system 7. Called party numbers, for example, may be mapped to new numbers, which select from a set of standard rates on the prepaid platform. In a similar manner, calling party numbers may be mapped so that multiple users may access a single prepaid account, implementing group accounts.

Third party platforms 32 may charge from the legacy prepaid systems using an open API, via API logic module 55 and an API interface adapter module 63. The API supports both Parlay-type functionality over Corba, and also over XML, but also supports a range of other standards, including SOAP/XML. Transactions may be rated by the third party platform or may be rated using the internal rating function module 57.

A SIP Proxy module 58 is an implementation of the standards specified earlier, in such a way that SIP controlled devices (typically softswitches) connected via a SIP interface adapter 62 appear to be in communication with SIP based Application Servers.

A charging control logic module 56 determines the nature of the charging to be initiated for a given call or data session. This makes use of internal stored subscriber profile data to determine if a particular account is prepaid or postpaid and/or whether an external Converged Billing System 41 or external rating system is used. For both prepaid and postpaid accounts, the charging control logic module 56 also produces full Call Detail Records or Event Detail Records. These are used to provide account histories for prepaid and postpaid accounts, for billing purposes for postpaid accounts, and also for revenue assurance functions.

The external Converged Billing System or Rating system is interfaced by a charging interface adapter 64, in such a way that all transactions controlled by the CCS may be rated via the external system. Typically, the interface uses the Parlay Charging/Rating (as specified by 3GPP in Parlay 3.2, ES 201 915-1 V1.3.1 and more recent Parlay 4.0) standards, although proprietary versions are also supported through the interface adapter 64.

The CCS, in the embodiment of Figure 9, allows legacy prepaid systems, interfaced via an SSF 52 and a prepaid interface adapter 65 to control voice calls in a network that uses incompatible protocols. This is done via the Service Control Function 53 and a voice interface adapter 60 interworking via the Generic Call/Session Control Core 51. It is a characteristic of the invention that the protocols used to control the network elements may all be incompatible. This characteristic is provided by the fact that all protocols are handled internally in a generic and abstract form, for voice, data and event based activity, with input and output adapter modules used to adapt to the internal representation. For example, the legacy prepaid system 7 could use the CS1 standard, while some or all of the network elements controlling the voice calls, could use CAP2, for example. This has many advantages for operating prepaid voice roaming services in foreign networks, without upgrading the SCP.

Simultaneously, data sessions using protocols incompatible with those of a legacy prepaid system 7 can also be controlled by the CCS, again interfaced via an SSF 52 and a prepaid interface adapter 65. This is done via an SCF 54 and a data interface adapter 61 interworking via the Generic Call/Session Control Core 51.

Another feature of the invention is that, simultaneously with voice, prepaid data (GPRS or SMS) charging services can be provided, both in the home network and also for outbound roamers, via a CAP3 interface also incompatible with the legacy prepaid system 7. Where the control element in the data network is not standard, for example where the control element is some type of data proxy with a soft SSF, as previously referred to, then this can also be supported via SCF 54 and data interface adapter 61. A further feature of the invention is that the legacy prepaid system 7 can also offer prepaid service in Voice over IP (VoIP) networks, where the VoIP network elements, typically soft switches, are controlled via the Generic Call/Session Control Core 51 and integrated SIP Proxy Server 58 and a SIP interface adapter 62.

An advantage of the invention is that it enables the simultaneous operation of a Converged Billing System 41 and a legacy prepaid system 7, in such a way that all transactions are rated by the CBS but the prepaid account balance is maintained on the legacy prepaid system. The legacy prepaid system is charged by simulation of voice calls as described earlier. This feature enables sophisticated rating and promotional capabilities of next generation billing systems to be deployed as an upgrade (rather than a replacement) for existing legacy prepaid systems, and enables the transition to fully converged billing while minimising network disruption and risk and maximising return on existing investment.

An embodiment of the Session Control Core according to a second aspect of the invention is shown in Figure 11. The Session Control Core (SCC) is capable of translating data received from a data network element, using a data service protocol, to simulate a voice call using a voice call protocol for output to a prepaid charging module. The SCC is connectable to at least one Service Switching Function module and at least one Service Control Function module, as shown is Figure 10. The SCC comprises a state machine capable of processing a request from a user for a service, irrespective of whether the requested service is a data service or a voice service. This generic call/session model is based on a modified CAMEL SCF call model. This model applies for voice, data and for event based activity.

As shown in Figure 11, the state machine includes an idle state 80, in which the SCC is capable of accepting the request from the user for a voice or data service; a connecting state 81, in which the SCC is capable of establishing a connection between the user and the requested voice or data service; a routing state 82, in which interconnection is established to allow (user) interaction between the user and the requested service; a user interaction state 83, in which data is exchanged between the user and the requested service; and an active state 84, in which the connection between the user and the requested (or destination) service is maintained; and the state machine is capable of transitioning between states.

In the embodiment shown, the state machine can transition from the idle state to the connecting state; from the connecting state to the routing state, the active state or the idle state; from the routing state to the user interaction state or the idle state; from the user interaction state to the connecting state or the idle state and from the active state to the idle state.

The state machine is configured to be responsive to abort inputs. The abort inputs trigger the state machine to transition to the idle state. The state machine is also configured to be responsive to a disconnect input. The disconnect input triggers the state machine to transition to the idle state.

Figure 12 shows the support functions of an embodiment of the converged charging module. The Real Time Distributed State Machine Environment 66 provides generic support for state machine components throughout the system. This consists of generic libraries for encoding and decoding messages, message scheduling, message routing, message transmission/reception, timer support functions, real time monitoring and debugging.

In a typical embodiment, the invention makes use of a number of platform, support and supplementary services as shown in Fig 12.

A Platform Management module (PM) 70 controls the start-up and shut down of other software modules in the system in an orderly manner.

A Diagnostics module (Diag) 71 provides on line and off line diagnostics for the system and reports failures and corrective actions taken.

A Resource Management module (RM) 72 allocates system resources automatically and removes and restores service status from other modules as required.

A Performance module (Perf) 73 monitors and tracks the system performance and raises alarms and events as required.

An Alarm and Event Handler (AEH) 74 provides generic support for all system and applications software for logging, archiving and tracking alarms and provides a user interface for alarm management.

A CDR Handler (CDRH) 75 provides generic support for all system and applications software for logging and archiving Call Detail Records and Event Detail records, provides a CDR management user interface and provides management functions for CDR transfer to third party platforms.

A Statistics Handler (Stats) 76 provides generic support for all system and applications software for logging, tracking and archiving system statistics and provides a statistics management user interface.

An IN Support Module (Stats) 77 provides generic support to all system and applications software for encoding and decoding CAP/IN/WIN/MAP type protocols.

A Web Server (WS) 78 provides generic Web server support for all system management functions, including customer care and self care as appropriate.

A Database Server (DB) 79 provides generic database support for all system functions including subscriber profile management and configuration management. It is appreciated that certain features of the invention, which are, for clarity, described in the context of separate embodiments, may also be provided in combination in a single embodiment. Conversely, various features of the invention which are, for brevity, described in the context of a single embodiment, may also be provided separately or in any suitable subcombination.

The words "comprises/comprising" and the words "having/including" when used herein with reference to the present invention are used to specify the presence of stated features, integers, steps or components but does not preclude the presence or addition of one or more other features, integers, steps, components or groups thereof.

## Claims

1. A converged charging module (31), for use in a cellular telecommunications system, comprising:
a Service Switching Function module (52), capable of emulating a voice based circuit switch; and
a prepaid interface adapter (65), in communication with the Service Switching Function module (52) and connectable to a prepaid charging module (7) which uses a voice call protocol, so that the prepaid charging module (7) appears to be communicating with a voice based circuit switch using the voice call protocol; and
at least one Service Control Function module (53, 54), capable of emulating control functions of the prepaid charging module (7); and
a data interface adapter (61), in communication with the at least one Service Control Function module (53, 54) and connectable to a data network element (21) which uses a data service protocol, so that the data network element (21) appears to be communicating with the prepaid charging module (7); and
a Session Control Core (51), in communication with the at least one Service Switching Function module (52) and the at least one Service Control Function module (53, 54), and capable of translating data received from the data network element (21), using the data service protocol, to simulate a voice call using the voice call protocol for output to the prepaid charging module (7).

2. A converged charging module (31) as claimed in claim 1, wherein the prepaid charging module (7) is a Service Control Point.

3. A converged charging module (31) as claimed in any preceding claim, wherein the data network element (21) comprises a data Service Switching Function (SSF) (22).

4. A converged charging module (31) as claimed in claim 3, wherein the data SSF (22) comprises a Serving GPRS Support Node.

5. A converged charging module (31) as claimed in claim 3 or claim 4, wherein the data SSF (21) supports a CAP3 protocol.

6. A converged charging module (31) as claimed in any preceding claim, wherein the prepaid charging module (7) uses a CAP2 or INAP CS1 or WIN or other IN based protocol.

7. A converged charging module (31) as claimed in any preceding claim, further comprising:
a voice interface adapter (60), in communication with the at least one Service Control Function (53) and connectable to a voice based circuit switch (2), so that the converged charging module (31) acts as a proxy charging module for the voice based circuit switch.

8. A converged charging module (31) as claimed in any preceding claim, further comprising:
an API logic module (55), which implements an open API; and
an API interface adapter (63), in communication with the API logic module (55) and connectable to a third party content platform (32), so that the API logic module can communicate in real time with the Session Control Core (51) to allow for billing of data sent by the third party content platform by simulating a voice call to the prepaid charging module.

9. A converged charging module (31) as claimed in claim 8, wherein the data sent by the third party content platform (32) is a mobile telephone application.

10. A converged charging module (31) as claimed in any preceding claim, further comprising:
a Session Initiation Protocol (SIP) proxy module (58) capable of emulating a SIP based application server; and
a SIP interface adapter (62), in communication with the SIP proxy module (58) and connectable to a SIP controlled device, so that the SIP controlled device appears to be communicating with a SIP based application server.

11. A converged charging module (31) as claimed in claim 10, wherein the SIP controlled device is a soft switch.

12. A converged charging module (31) as claimed in any preceding claim, further comprising:
an internal rating function module (57) which rates activity controlled by the converged charging module, calculates an equivalent voice call charge and simulates a voice call for output to the prepaid charging module (7) via the prepaid interface adapter (65) in order to charge a user for the activity.

13. A converged charging module (31) as claimed in any preceding claim, further comprising:
a charging control logic module (56); and
a charging interface adapter (64), in communication with the charging control logic module and connectable to an external rating system (41), so that a charge associated with an activity controlled by the converged charging module (31) may be determined by the external rating system (41).

14. A converged charging module (31) as claimed in claim 13, wherein the charging control module (56) produces Call Detail Records or Event Detail Records for each call or data session.

15. A converged charging module (31) as claimed in claim 13 or claim 14, wherein the charging control logic module (56) determines, for a particular call or data session, whether an associated charge is to be prepaid or postpaid.

16. A converged charging module (31) as claimed in any of claims 13 to 15, wherein the charging interface adapter (64) and the external rating system (41) communicate using Parlay rating standards.

17. A converged charging module (31) as claimed in any of claims 13 to 16, wherein the external rating system (41) is a Converged Billing System.

18. A converged charging module (31) as claimed in any preceding claim, further comprising a local services module (59), which is capable of implementing service functions which would normally be provided by the prepaid charging module (7).

19. A converged charging module (31) as claimed in claim 18, wherein the local services module (59) is capable of mapping a notification of an insufficient account balance issued by the prepaid charging module (7) to an equivalent data based notification for relay to the user.

20. A converged charging module (31) as claimed in claim 19 or 20, wherein the data based notification is an SMS message or USSD message or dialog or a redirection of a web page accessed by the user.

21. A converged charging module (31) as claimed in any preceding claim, wherein the Session Control Core (SCC) (51) comprises a state machine capable of processing a request from a user for a service, irrespective of whether the requested service is a data service or a voice service, said state machine having:
an idle state (80), in which the SCC (51) is capable of accepting the request from the user for a voice or data service;
a connecting state (81), in which the SCC (51) is capable of establishing a connection between the user and the requested voice or data service;
a routing state (82), in which interconnection is established to allow interaction between the user and the requested service;
a user interaction state (83), in which data is exchanged between the user and the requested service; and
an active state (84), in which the connection between the user and the requested service is maintained;
and wherein the state machine is capable of transitioning between states.

22. A converged charging module (31) as claimed in claim 21, wherein the state machine can transition from the idle state to the connecting state.

23. A converged charging module (31) as claimed in claim 21 or 22, wherein the state machine can transition from the connecting state to the routing state, the active state or the idle state.

24. A converged charging module (31) as claimed in any of claims 21 to 23, wherein the state machine can transition from the routing state to the user interaction state or the idle state.

25. A converged charging module (31) as claimed in any of claims 21 to 24, wherein the state machine can transition from the user interaction state to the connecting state or the idle state.

26. A converged charging module (31) as claimed in any of claims 21 to 25, wherein the state machine can transition from the active state to the idle state.

27. A converged charging module (31) as claimed in any of claims 21 to 26, wherein the state machine is configured to be responsive to abort inputs and the abort inputs trigger the state machine to transition to the idle state.

28. A converged charging module (31) as claimed in any of claims 21 to 27, wherein the state machine is configured to be responsive to a disconnect input and the disconnect input triggers the state machine to transition to the idle state.

## Patentansprüche

1. Ein konvergiertes Gebühren- bzw. Abrechnungsmodul (31) zur Nutzung in einem zellularen Telekommunikationssystem, wobei das Modul Folgendes aufweist:
ein Dienstschaltfunktionsmodul bzw. Service Switching Function Module (52) geeignet zum Emulieren eines sprachbasierten Leitungsschalter bzw. einer sprachbasierten Leitungsvermittlung; und
einen Vorauszahlungs- bzw. Prepaid-Schnittstellenadapter (65), in Kommunikation mit dem Dienstschaltfunktionsmodul (52) und verbindbar mit einem Vorauszahlungs- bzw. Prepaid-Gebührenmodul (7), welches ein Sprachanrufprotokoll nutzt, so dass das Prepaid-Gebührenmodul (7) mit einem sprachbasierten Leitungsschalter unter Verwendung des Sprachanrufprotokolls zu kommunizieren scheint; und
wenigstens ein Dienststeuerfunktionsmodul bzw. Service Control Function Module (53, 54), geeignet zum Emulieren von Steuerfunktionen von dem Prepaid-Gebührenmodul (7); und
einen Datenschnittstellenadapter (61) in Kommunikation mit dem wenigstens einen Dienststeuerfunktionsmodul (53, 54) und verbindbar mit einem Datennetzwerkelement (21), welches ein Datendienstprotokoll nutzt, so dass das Datennetzwerkelement (21) mit dem Prepaid-Gebührenmodul (7) zu kommunizieren scheint; und
einen Sitzungssteuerkern bzw. Session Controll Core (51) in Kommunikation mit wenigstens einem Dienstschaltfunktionsmodul (52) und dem wenigstens einen Dienststeuerfunktionsmodul (53, 54) und geeignet zum Umsetzen von Daten, die von dem Datennetzwerkelement (21) empfangen werden, unter Verwendung des Datendienstprotokolls, zum Simulieren eines Sprachanrufs unter Verwendung des Sprachanrufprotokolls zur Ausgabe an das Prepaid-Gebührenmodul (7).

2. Konvergiertes Gebührenmodul (31) nach Anspruch 1, wobei das Prepaid-Gebührenmodul (7) ein Dienststeuerpunkt bzw. Service Control Point ist.

3. Konvergiertes Gebührenmodul (31) nach irgendeinem vorhergehenden Anspruch, wobei das Datennetzwerkelement (21) eine Datendienstschaltfunktion (SSF = Service Switching Function) (22) aufweist.

4. Konvergiertes Gebührenmodul (31) nach Anspruch 3, wobei die Daten SSF (22) einen versorgenden GPRS Unterstützungsknoten bzw. Serving GPRS Support Node aufweist.

5. Konvergiertes Gebührenmodul (31) nach Anspruch 3 oder Anspruch 4, wobei die Daten SSF (21) ein CAP3 Protokoll unterstützt.

6. Konvergiertes Gebührenmodul (31) nach irgendeinem vorhergehenden Anspruch, wobei das Prepaid-Gebührenmodul (7) ein CAP2 oder INAP CS1 oder WIN oder ein anderes IN basiertes Protokoll nutzt.

7. Konvergiertes Gebührenmodul (31) nach irgendeinem vorhergehenden Anspruch, das ferner aufweist:
einen Sprachschnittstellenadapter (60), in Kommunikation mit der wenigstens einen Dienststeuerfunktion (53) und verbindbar mit einem sprachbasierten Leitungsschalter (2), so dass das konvergierte Gebührenmodul (31) als ein Proxy Gebührenmodul für den sprachbasierten Leitungsschalter bzw. die sprachbasierte Leitungsvermittlung agiert.

8. Konvergiertes Gebührenmodul (31) nach irgendeinem vorhergehenden Anspruch, das ferner aufweist:
ein API Logikmodul (55), welches eine open API implementiert; und
einen API Schnittstellenadapter (63), in Kommunikation mit dem API Logikmodul (55) und verbindbar mit einer Inhaltsplattform (32) von Dritten, so dass das API Logikmodul in Echtzeit mit dem Sitzungssteuerkern bzw. Session Control Core (51) kommunizieren kann um Abrechnung von, durch die Inhaltsplattform von Dritten gesendeten, Daten zuzulassen und zwar durch Simulieren eines Sprachanrufs an das Prepaid-Gebührenmodul.

9. Konvergiertes Gebührenmodul (31) nach Anspruch 8, wobei die durch die Inhaltsplattform (32) von Dritten gesendeten Daten eine Mobiltelefonanwendung ist.

10. Konvergiertes Gebührenmodul (31) nach irgendeinem vorhergehenden Anspruch, wobei das Modul ferner aufweist:
ein Sitzungsinitialisierungsprotokoll-(SIP = Session Initiation Protocol)-Proxy Modul (58) geeignet zum Emulieren eines SIP basierten Anwendungsservers; und
einen SIP Schnittstellenadapter (62) in Kommunikation mit dem SIP Proxy Modul (58) und verbindbar mit einer SIP gesteuerten Vorrichtung, derart, dass die SIP gesteuerte Vorrichtung mit einem SIP basierten Anwendungsserver zu kommunizieren, scheint.

11. Konvergiertes Gebührenmodul (31) nach Anspruch 10, wobei die SIP gesteuerte Vorrichtung ein Softschalter bzw. eine Soft-Vermittlung ist.

12. Konvergiertes Gebührenmodul (31) nach irgendeinem vorhergehenden Anspruch, wobei das Modul ferner aufweist:
ein internes Rating- bzw. Bewertungsfunktionsmodul (57), welches durch das konvergierte Gebührenmodul gesteuerte Aktivität bewertet, eine äquivalente Sprachanrufgebühr berechnet und einen Sprachanruf simuliert zur Ausgabe an das Prepaid-Gebührenmodul (7) und zwar über den Prepaid-Schnittstellenadapter (65) um einen Nutzer die Aktivität in Rechnung zu stellen.

13. Konvergiertes Gebührenmodul (31) nach irgendeinem vorhergehenden Anspruch, wobei das Modul ferner aufweist:
ein Gebührensteuerlogikmodul (56); und
einen Gebührenschnittstellenadapter (64) in Kommunikation mit dem Gebührensteuerlogikmodul und verbindbar mit einem externen Rating- bzw. Bewertungssystem (41), derart, dass eine Gebühr, die mit einer durch das konvergierte Gebührenmodul (31) gesteuerte Aktivität assoziiert ist, durch das externe Bewertungssystem (41) bestimmt werden kann.

14. Konvergiertes Gebührenmodul (31) nach Anspruch 13, wobei das Gebührensteuermodul (56) Anrufdetaileinträge bzw. Call Detail Records oder Ereignisdetaileinträge bzw. Event Detail Records für jeden Anruf oder jede Datensitzung erzeugt.

15. Konvergiertes Gebührenmodul (31) nach Anspruch 13 oder 14, wobei das Abrechungssteuerlogikmodul (56) für eine bestimmte Anruf- oder Datensitzung bestimmt, ob eine assoziierte Gebühr vorauszubezahlen bzw. prepaid oder im Nachhinein zu bezahlen bzw. postpaid ist.

16. Konvergiertes Gebührenmodul (31) nach irgendeinem der Ansprüche 13 bis 15, wobei der Gebührenschnittstellenadapter (64) und das externe Bewertungssystem (41) unter Verwendung von Parlay Rating bzw. Bewertungsstandards kommunizieren.

17. Konvergiertes Gebührenmodul (31) nach irgendeinem der Ansprüche 13 bis 16, wobei das externe Rating-System (41) ein konvergiertes Rechungserstellungssystem bzw. Converged Billing System ist.

18. Konvergiertes Gebührenmodul (31) nach irgendeinem vorhergehenden Anspruch, ferner ein lokales Dienst- bzw. Service-Modul (59) aufweisend, welches geeignet ist zum Implementieren von Servicefunktionen, welche normalerweise durch das Prepaid-Gebührenmodul (7) vorgesehen würden.

19. Konvergiertes Gebührenmodul (31) nach Anspruch 18, wobei das lokale Servicemodul (59) geeignet ist zum Abbilden einer Benachrichtigung über einen ungenügenden Kontostand, herausgegeben durch das Prepaid-Gebührenmodul (7), auf eine auf äquivalente datenbasierte Benachrichtigung zur Weiterleitung an den Nutzer.

20. Konvergiertes Gebührenmodul (31) nach Anspruch 19 oder 20, wobei die datenbasierte Benachrichtigung eine SMS Nachricht oder eine USSD Nachricht oder ein Dialog oder eine Weiter- bzw. Umleitung von einer Webseite, auf die durch den Nutzer zugegriffen wird, ist.

21. Konvergiertes Gebührenmodul (31) nach irgendeinem vorhergehenden Anspruch, wobei der Sitzungssteuerkern (SCC = Session Control Core) (51) eine Zustandsmaschine bzw. einen Automaten aufweist, geeignet zum Verarbeiten einer Anfrage von einem Nutzer nach einem Dienst, unabhängig davon, ob der angefragte Dienst ein Datendienst oder ein Sprachdienst ist, wobei der Automat Folgendes besitzt:
einen Ruhe- bzw. Leerlaufzustand (80), in dem der SCC (51) geeignet ist zum Annehmen der Anfrage von dem Nutzer nach einem Sprach- oder Datendienst;
einen Verbindungszustand (81), in dem der SCC (51) geeignet ist zum Herstellen bzw. Aufbauen einer Verbindung zwischen dem Nutzer und dem angefragten Sprach- oder Datendienst;
einen Routing- bzw. Leitzustand (82) in dem eine Verbindung bzw. Zusammenschaltung hergestellt wird, um Interaktion zwischen dem Nutzer und dem angefragten Dienst zu erlauben;
einen Nutzerinteraktionszustand (83), in dem Daten zwischen dem Nutzer und dem angefragten Dienst ausgetauscht werden; und
einen Aktiv-Zustand (84), in dem die Verbindung zwischen dem Nutzer und dem angefragten Dienst gehalten wird;
und wobei der Automat geeignet ist zum Wechseln zwischen den Zuständen.

22. Konvergiertes Gebührenmodul (31) nach Anspruch 21, wobei der Automat von dem Leerlaufzustand zu dem Verbindungszustand wechseln kann.

23. Konvergiertes Gebührenmodul (31) nach Anspruch 21 oder 22, wobei der Automat von dem Verbindungszustand zu dem Routing-Zustand, dem Aktivzustand oder dem Ruhezustand wechseln kann.

24. Konvergiertes Gebührenmodul (31) nach irgendeinem der Ansprüche 21 bis 23, wobei der Automat von dem Routing-Zustand zu dem Nutzerinteraktionszustand oder dem Ruhezustand wechseln kann.

25. Konvergiertes Gebührenmodul (31) nach irgendeinem der Ansprüche 21 bis 24, wobei der Automat von dem Nutzerinteraktionszustand zu dem Verbindungszustand oder dem Ruhezustand wechseln kann.

26. Konvergiertes Gebührenmodul (31) nach irgendeinem der Ansprüche 21 bis 25, wobei der Automat von dem Aktiv-Zustand zu dem Ruhezustand wechseln kann.

27. Konvergiertes Gebührenmodul (31) nach irgendeinem der Ansprüche 21 bis 26, wobei der Automat konfiguriert ist anzusprechen auf Abrecheingaben und die Abrecheingaben den Automat anstoßen, um zu dem Ruhezustand zu wechseln.

28. Konvergiertes Gebührenmodul (31) nach irgendeinem der Ansprüche 21 bis 27, wobei der Automat konfiguriert ist zum Ansprechen auf eine Trenneingabe und die Trenneingabe den Automat anstößt um zu dem Ruhezustand zu wechseln.

## Revendications

1. Module de facturation convergente (31), pour utilisation dans un système de télécommunication cellulaire, comprenant :
un module de Fonction de Commutation de Service (52), capable d'émuler un commutateur de circuits vocaux ; et
un adaptateur d'interface de pré-paiement (65), en communication avec le module de Fonction de Commutation de Service (52) et connectable à un module de facturation à pré-paiement (7) qui utilise un protocole d'appel vocal, de telle sorte que le module de facturation à pré-paiement (7) apparaît comme étant en communication avec un commutateur de circuits vocaux en utilisant le protocole d'appel vocal ; et
au moins un module de Fonction de Contrôle de Service (53, 54), capable d'émuler des fonctions de contrôle du module de facturation à pré-paiement (7) ; et
un adaptateur d'interface de données (61), en communication avec ledit au moins un module de Fonction de Contrôle de Service (53, 54) et connectable à un élément de réseau de données (21) qui utilise un protocole de service de données, de telle sorte que l'élément de réseau de données (21) apparaît comme étant en communication avec le module de facturation à pré-paiement (7) ; et
un Coeur de Contrôle de Session (51), en communication avec ledit au moins un module de Fonction de Commutation de Service (52) et ledit au moins un module de Fonction de Contrôle de Service (53, 54), et capable de traduire des données reçues de l'élément de réseau de données (21), en utilisant le protocole de service de données, pour simuler un appel vocal utilisant le protocole d'appel vocal, pour les fournir au module de facturation à pré-paiement (7).

2. Module de facturation convergente (31) selon la revendication 1, dans lequel le module de facturation à pré-paiement (7) est un Point de Contrôle de Service.

3. Module de facturation convergente (31) selon l'une quelconque des revendications précédentes, dans lequel l'élément de réseau de données (21) comprend une Fonction de Commutation de Service (SSF) de données (22).

4. Module de facturation convergente (31) selon la revendication 3, dans lequel la SSF de données (22) comprend un Noeud de Support GPRS de Desserte.

5. Module de facturation convergente (31) selon la revendication 3 ou 4, dans lequel la SSF de données (21) accepte un protocole CAP3.

6. Module de facturation convergente (31) selon l'une quelconque des revendications précédentes, dans lequel le module de facturation à pré-paiement (7) utilise un protocole CAP2 ou INAP CS1 ou WIN ou un autre protocole basé sur IN.

7. Module de facturation convergente (31) selon l'une quelconque des revendications précédentes, comprenant en outre :
un adaptateur d'interface vocale (60), en communication avec ladite au moins une Fonction de Contrôle de Service (53) et connectable à un commutateur de circuits vocaux (2), de telle sorte que le module de facturation convergente (31) sert de module de facturation mandataire pour le commutateur de circuits vocaux.

8. Module de facturation convergente (31) selon l'une quelconque des revendications précédentes, comprenant en outre :
un module de logique API (55), qui met en oeuvre une API ouverte ; et
un adaptateur d'interface API (63), en communication avec le module de logique API (55) et connectable à une plateforme de contenu d'un tiers (32), de telle sorte que le module de logique API peut communiquer en temps réel avec le Coeur de Contrôle de Session (51) pour permettre la facturation de données envoyées par la plateforme de contenu d'un tiers en simulant un appel vocal pour le module de facturation à pré-paiement.

9. Module de facturation convergente (31) selon la revendication 8, dans lequel les données envoyées par la plateforme de contenu d'un tiers (32) sont une application de téléphone mobile.

10. Module de facturation convergente (31) selon l'une quelconque des revendications précédentes, comprenant en outre :
un module serveur mandataire de Protocole d'Initiation de Session (SIP) (58) capable d'émuler un serveur d'application basé sur SIP ; et
un adaptateur d'interface SIP (62), en communication avec le module serveur mandataire SIP (58) et connectable à un dispositif contrôlé par SIP, de telle sorte que le dispositif contrôlé par SIP apparaît comme étant en communication avec le serveur d'application basé sur SIP.

11. Module de facturation convergente (31) selon la revendication 10, dans lequel le dispositif contrôlé par SIP est un commutateur logiciel.

12. Module de facturation convergente (31) selon l'une quelconque des revendications précédentes, comprenant en outre :
un module de fonction d'évaluation interne (57) qui évalue l'activité contrôlée par le module de facturation convergente, calcule un coût d'appel vocal équivalent et simule un appel vocal pour fourniture au module de facturation à pré-paiement (7) par l'intermédiaire de l'adaptateur d'interface de pré-paiement (65) afin de facturer l'activité à un utilisateur.

13. Module de facturation convergente (31) selon l'une quelconque des revendications précédentes, comprenant en outre :
un module de logique de contrôle de facturation (56) ; et
un adaptateur d'interface de facturation (64), en communication avec le module de logique de contrôle de facturation et connectable à un système externe d'évaluation (41), de telle sorte qu'un coût associé à une activité contrôlée par le module de facturation convergente (31) peut être déterminé par le système externe d'évaluation (41).

14. Module de facturation convergente (31) selon la revendication 13, dans lequel le module de contrôle de facturation (56) produit des Enregistrements Détaillés d'Appel et des Enregistrements Détaillés d'Evènement pour chaque appel ou chaque session de données.

15. Module de facturation convergente (31) selon la revendication 13 ou 14, dans lequel le module de logique de contrôle de facturation (56) détermine, pour un appel ou une session de données en particulier, si un coût associé doit être pré-payé ou post-payé.

16. Module de facturation convergente (31) selon l'une quelconque des revendications 13 à 15, dans lequel l'adaptateur d'interface de facturation (64) et le système externe d'évaluation (41) communiquent en utilisant des normes d'évaluation de Parlay.

17. Module de facturation convergente (31) selon les revendications 13 à 16, dans lequel le système externe d'évaluation (41) est un Système de Facturation Convergente.

18. Module de facturation convergente (31) selon l'une quelconque des revendications précédentes, comprenant en outre un module de services locaux (59), qui est capable de mettre en oeuvre des fonctions de service qui devraient normalement être assurées par le module de facturation à pré-paiement (7).

19. Module de facturation convergente (31) selon la revendication 18, dans lequel le module de services locaux (59) est capable de mapper une notification d'un solde de compte insuffisant, délivrée par le module de facturation à pré-paiement (7), vers une notification équivalente sous forme de données, pour la relayer à l'utilisateur.

20. Module de facturation convergente (31) selon la revendication 19 ou 20, dans lequel la notification sous forme de données est un message SMS ou un message USSD ou un dialogue ou une redirection d'une page de la toile mondiale, accédé par l'utilisateur.

21. Module de facturation convergente (31) selon l'une quelconque des revendications précédentes, dans lequel le Coeur de Contrôle de Session (SCC) (51) comprend une machine d'état capable de traiter une requête provenant d'un utilisateur pour un service, sans tenir compte si le service demandé est un service de données ou un service vocal, la machine d'état comportant :
un état de repos (80), dans lequel le SCC (51) est capable d'accepter la requête provenant de l'utilisateur pour un service vocal ou de données ;
un état de connexion (81), dans lequel le SCC (51) est capable d'établir une connexion entre l'utilisateur et le service vocal ou de données demandé ;
un état d'acheminement (82), dans lequel une interconnexion est établie pour permettre une interaction entre l'utilisateur et le service demandé ;
un état d'interaction d'utilisateur (83), dans lequel des données sont échangées entre l'utilisateur et le service demandé ; et
un état actif (84), dans lequel la connexion entre l'utilisateur et le service demandé est maintenue ;
et dans lequel la machine d'état est capable de transitions entre états.

22. Module de facturation convergente (31) selon la revendication 21, dans lequel la machine d'état peut passer de l'état de repos à l'état de connexion.

23. Module de facturation convergente (31) selon la revendication 21 ou 22, dans lequel la machine d'état peut passer de l'état de connexion à l'état d'acheminement, à l'état actif ou à l'état de repos.

24. Module de facturation convergente (31) selon l'une quelconque des revendications 21 à 23, dans lequel la machine d'état peut passer de l'état d'acheminement à l'état d'interaction d'utilisateur ou à l'état de repos.

25. Module de facturation convergente (31) selon l'une quelconque des revendications 21 à 24, dans lequel la machine d'état peut passer de l'état d'interaction d'utilisateur à l'état de connexion ou à l'état de repos.

26. Module de facturation convergente (31) selon l'une quelconque des revendications 21 à 25, dans lequel la machine d'état peut passer de l'état actif à l'état de repos.

27. Module de facturation convergente (31) selon l'une quelconque des revendications 21 à 26, dans lequel la machine d'état est agencée pour répondre à des entrées d'annulation et les entrées d'annulation déclenchent le passage de la machine d'état dans l'état de repos.

28. Module de facturation convergente (31) selon l'une quelconque des revendications 21 à 27, dans lequel la machine d'état est agencée pour répondre à une entrée de déconnexion et l'entrée de déconnexion déclenche le passage de la machine d'état dans l'état de repos.
